# FASCICULE DE BREVET EUROPEEN

(11) **EP 3 219 229 B1**
(45) Date de publication et mention de la délivrance du brevet: **05.12.2018**
(21) Numéro de dépôt: 17161449.8
(22) Date de dépôt: 16.03.2017
(51) Int. Cl.: A47J 19/02, A23N 1/02

(54) **VIS ET APPAREIL DE PRESSAGE D'ALIMENTS DE TYPE FRUITS ET/OU LÉGUMES ÉQUIPÉ D'UN SYSTÈME DE BALAYAGE**
SCHRAUBE UND GERÄT ZUM PRESSEN VON LEBENSMITTELN VOM TYP OBST UND/ODER GEMÜSE, DAS MIT EINEM SCAN-SYSTEM AUSGESTATTET IST
SCREW AND APPARATUS FOR PRESSING FOOD SUCH AS FRUIT AND/OR VEGETABLES PROVIDED WITH A SCANNING SYSTEM

(30) Priorité: 17.03.2016 FR 1652285
(43) Date de publication de la demande: 20.09.2017
(73) Titulaire: SEB S.A., 69130 Ecully (FR)
(72) Inventeur: RAUDE, Christian, 64160 Buros (FR); CYPRES, Régis, 65100 Lourdes (FR)
(74) Mandataire: Bourrières, Patrice

(56) Documents cités:
- EP-A1- 2 875 758
- EP-A2- 1 922 967
- WO-A1-2005/016088

## Description

### Domaine technique

La présente invention se rapporte au domaine des appareils électroménagers de type appareil de pressage d'aliments de type fruits et/ou légumes pour en extraire le jus, plus couramment appelés pressoirs à jus voire extracteurs de jus.

L'invention porte tout particulièrement sur les appareils de pressage qui comprennent une vis de pressage à axe de rotation principalement vertical et au moins un filtre permettant de séparer plus ou moins le jus de la matière sèche sous l'action de la vis de pressage, de sorte à préparer des jus vitaminés ou des coulis, voire des purées.

### Etat de la technique

Les appareils de pressage d'aliments de type fruits et/ou légumes, équipés d'une vis de pressage à axe de rotation vertical et d'au moins un filtre, sont connus de l'homme du métier. De tels appareils de pressage ont des performances accrues en termes d'extraction du jus des fruits et légumes, en comparaison d'autres types d'appareils d'extraction du jus, en particulier les centrifugeuses dont le rendement n'excède pas les 60% alors que les pressoirs à vis à axe de rotation vertical permettent d'obtenir un rendement pouvant atteindre 90% pour certains fruits et légumes.

A titre d'exemple, les documents WO 2007/148872, KR 101159177, CN 203138023, CN 203226617, CN 203234538, CN 103356049, WO 2014/003447, décrivent un appareil de pressage qui comprend notamment un boîtier, un réceptacle, au moins un filtre, une vis de pressage et un couvercle. Le boîtier constitue le corps de l'appareil, celui-ci intégrant des moyens d'entraînement en rotation de la vis de pressage selon un axe vertical. Le boîtier permet la réception du réceptacle. Le réceptacle, également appelé bol, comprend un premier conduit d'évacuation des jus et un second conduit d'évacuation des matières sèches. Le filtre présente une forme tronconique configurée pour être logée dans le réceptacle, et permet la préparation soit de jus de fruits soit de coulis. La vis de pressage se loge dans le filtre, la configuration entre ces éléments permettant à la vis de pressage de presser les aliments contre la paroi interne du filtre durant la rotation de la vis. La maille du filtre permet le passage du jus et éventuellement de particules d'aliments de faible granulométrie dans le cas d'un coulis (selon la taille de cette maille), ledit jus ou coulis s'évacuant par le premier conduit, tandis que la matière sèche s'évacue par une ouverture inférieure du filtre, puis par le second conduit. Le couvercle est assemblé avec la partie supérieure du réceptacle. Le couvercle comprend au moins un conduit qui communique avec le filtre et la vis de pressage, et qui permet l'introduction des aliments entiers ou prédécoupés, selon la configuration dudit conduit.

En outre, l'appareil de pressage, selon les différentes réalisations décrites dans ces documents précités, comprend un élément intermédiaire qui se loge dans le réceptacle entre la paroi externe du filtre et la paroi interne du réceptacle. Cet élément intermédiaire comprend des brosses ou des racloirs qui permettent de frotter la paroi interne du réceptacle voire la paroi externe du filtre. Des moyens d'assemblage sont mis en oeuvre entre la partie supérieure de l'élément intermédiaire et la partie supérieure de la vis de pressage de sorte que la rotation de la vis de pressage entraîne celle de l'élément intermédiaire, ce qui permet de frotter ou racler la paroi interne du réceptacle et/ou la paroi externe du filtre.

Ces différentes conceptions de l'art antérieur présentent pour inconvénient de complexifier le montage et le démontage des différents éléments de l'appareil pour son utilisation et son rinçage. En outre l'élément intermédiaire a une forme cylindrique ajourée portant des éléments de brossage ou de raclage, ce qui augmente considérablement le temps de nettoyage de l'appareil après son utilisation.

### Résumé de l'invention

La présente invention pallie ces inconvénients précités. A cet effet, l'invention concerne une vis de pressage d'un appareil de pressage d'aliments de type fruits et/ou légumes. La vis de pressage comprend un corps muni d'au moins un filet hélicoïdal principal s'étendant autour d'un axe de rotation de la vis de pressage. La vis de pressage comprend au moins un bras qui s'étend radialement par rapport audit axe de rotation. Le bras comporte à son extrémité distale une ailette configurée pour s'étendre vers une partie inférieure du corps à distance du corps. L'ailette comprend au moins un élément de nettoyage configuré pour balayer une paroi à nettoyer durant la rotation de la vis de pressage.

Dans une réalisation de l'invention, la vis de pressage comprend deux bras disposés en opposition et comportant chacun une ailette munie d'un élément de nettoyage. Cela permet de doubler la vitesse de balayage de la surface à nettoyer. On peut cependant envisager une variante de réalisation avec un seul bras.

Dans une réalisation de la vis de pressage selon l'invention, l'élément de nettoyage est agencé sur un côté externe de l'ailette, cet élément de nettoyage permettant de balayer une face interne d'une paroi d'un réceptacle de l'appareil. On peut envisager une variante de réalisation de la vis de pressage, avec un élément de nettoyage agencé sur un côté interne de l'ailette et permettant de balayer une face externe d'une paroi d'un tambour filtrant de l'appareil. Une combinaison des deux variantes de réalisation précitées est également envisageable.

Dans une réalisation de l'élément de nettoyage, celui-ci est un racloir. Un tel racloir est privilégié sur le côté externe de l'ailette, pour nettoyer la face interne de la paroi du réceptacle de l'appareil. On peut cependant envisager une variante selon laquelle l'élément de nettoyage est une brosse, une telle brosse étant privilégiée sur le côté interne de l'ailette pour nettoyer la face externe de la paroi du tambour filtrant.

Dans une réalisation de la vis de pressage selon l'invention, l'élément de nettoyage présente une extrémité libre fuyante vers l'arrière par rapport au sens de rotation de la vis de pressage selon l'axe de rotation, ce sens de rotation étant défini par ledit au moins un filet hélicoïdal principal de la vis de pressage.

Dans une réalisation préférée de la vis de pressage selon l'invention, l'extrémité libre fuyante de l'élément de nettoyage est incurvée. Cette forme incurvée favorise une évacuation du jus ou coulis vers le fond du réceptacle durant le balayage par l'élément de nettoyage.

Avantageusement encore, l'extrémité distale du bras présente un logement inférieur agencé en périphérie du corps de la vis de pressage.

L'invention concerne également un appareil de pressage d'aliments de type fruits et/ou légumes. L'appareil comprend un réceptacle et un tambour filtrant logé dans le réceptacle et configuré pour séparer plus ou moins le jus de la matière sèche. Le tambour filtrant est préférentiellement conique. L'appareil comprend également une vis de pressage configurée pour être logée dans le tambour filtrant et pour presser les aliments contre une face interne dudit tambour filtrant lors de sa rotation. L'appareil comprend aussi des moyens d'entraînement en rotation de la vis de pressage autour d'un axe de rotation principalement vertical. En outre, la vis de pressage comprend une extrémité supérieure comportant au moins un bras qui s'étend radialement à l'axe de rotation principalement vertical jusqu'à proximité d'un bord périphérique supérieur du tambour filtrant, dans lequel est insérée ladite vis de pressage. Le bras comporte à son extrémité distale une ailette configurée pour s'étendre entre la face interne du réceptacle et la face externe du tambour filtrant, lequel est inséré dans ledit réceptacle. L'ailette comprend au moins un élément de nettoyage balayant la face interne du réceptacle et/ou la face externe du tambour filtrant.

Ainsi, la conception de la vis de pressage selon l'invention supprime la présence d'un élément intermédiaire sur l'appareil, tel que cela était prévu selon les appareils de l'art antérieur. Selon l'invention, il suffit de positionner la vis de pressage dans le tambour filtrant en insérant ladite vis de pressage dans une ouverture supérieure dudit tambour filtrant, pour mettre concomitamment en place la ou les ailettes entre le réceptacle et le tambour filtrant, avec la ou les éléments de nettoyage au contact de la paroi à balayer.

Dans une réalisation de l'appareil de pressage selon l'invention, l'extrémité supérieure de la vis de pressage comprend deux bras disposés en opposition et comportant chacun une ailette munie d'un élément de nettoyage. Une variante de vis de pressage avec un seul bras reste cependant envisageable, comme précisé précédemment.

Dans une réalisation de l'appareil de pressage selon l'invention, l'élément de nettoyage est configuré sur un côté externe de l'ailette pour nettoyer la face interne de la paroi du réceptacle. Dans une variante de réalisation, l'élément de nettoyage est configuré sur un côté interne de l'ailette pour nettoyer la face externe de la paroi du tambour filtrant. Dans une autre variante, l'élément de nettoyage est configuré sur le côté externe et sur le côté interne de l'ailette, pour nettoyer à la fois la face interne de la paroi du réceptacle et la face externe de la paroi du tambour filtrant. Dans une autre variante avec deux bras, telle que précitée, un premier élément de nettoyage est configuré sur le côté externe de la première ailette du premier bras pour nettoyer la face interne de la paroi du réceptacle et un second élément de nettoyage est configuré sur le côté interne de la seconde ailette du second bras pour nettoyer la face externe de la paroi du tambour filtrant. Toutefois chaque bras peut aussi comporter un premier élément de nettoyage configuré sur le côté externe de l'ailette et un second élément de nettoyage configuré sur le côté interne de l'ailette.

L'élément de nettoyage est configuré pour nettoyer la face interne du réceptacle et/ou la face externe du tambour filtrant.

Dans une réalisation de l'appareil de pressage selon l'invention, l'élément de nettoyage comprend un racloir. Un tel racloir sera privilégié pour nettoyer la face interne de la paroi du réceptacle. Dans une variante de réalisation, l'élément de nettoyage comprend une brosse. Une telle brosse sera privilégiée pour nettoyer la face externe de la paroi du tambour filtrant. Dans une autre variante de réalisation, l'élément de nettoyage comprend un racloir et une brosse, pour nettoyer la face interne du réceptacle et la face externe du tambour filtrant.

Avantageusement encore, l'extrémité distale du bras présente un logement inférieur recevant une partie supérieure du bord périphérique supérieur du tambour filtrant.

Dans une réalisation de l'appareil de pressage selon l'invention, celui-ci comporte deux tambours filtrants configurés pour réaliser respectivement des jus et des coulis. Ces tambours filtrants peuvent être de conception similaire, seule changeant la maille de la paroi de filtration, pour obtenir une filtration plus ou moins poussée. L'un ou l'autre des tambours filtrants est mis en place dans le réceptacle et reçoit la vis de pressage durant l'utilisation de l'appareil, selon qu'il s'agisse de préparer un jus ou un coulis.

Le pressage des fruits et/ou légumes au moyen de la vis de pressage et du tambour filtrant permet de séparer les jus ou les coulis, de la matière sèche. Dans une réalisation de l'appareil de pressage selon l'invention, le réceptacle comprend des premiers moyens d'évacuation des jus ou coulis et des seconds moyens d'évacuation des matières sèches. Cela permet d'évacuer séparément au fur et à mesure le jus ou le coulis, et les matières sèches, afin de permettre le pressage en continu d'autres fruits ou légumes. Selon cette réalisation de l'appareil de pressage, le réceptacle comprend un fond incliné et comprend un premier conduit d'évacuation des jus ou coulis, le fond incliné étant configuré pour diriger les jus ou coulis filtrés vers le premier conduit. En outre, le fond incliné comprend un premier passage qui communique avec un second passage sur le fond du tambour filtrant. Le réceptacle comprend un second conduit d'évacuation des matières sèches qui communique avec ces premier et second passages et permet d'extraire les matières sèches du tambour filtrant.

Selon l'invention, l'appareil de pressage comprend un boîtier configuré pour recevoir directement le réceptacle, ledit boîtier intégrant un moteur d'entraînement en rotation d'un axe qui s'étend plus ou moins verticalement au-dessus dudit boîtier. Un mécanisme de transmission est agencé entre le moteur et l'axe, par exemple pour démultiplier la vitesse de rotation. En outre, le réceptacle comprend un premier trou de passage de l'axe, et le tambour filtrant comprend un second trou de passage de l'axe, des moyens de connexion étant mis en oeuvre entre l'axe et la vis de pressage.

### Brève description des figures

Les caractéristiques et avantages de l'invention apparaîtront à la lecture de la description suivante d'un mode de réalisation préféré, laquelle s'appuie sur des figures parmi lesquelles :
- la figure 1 illustre une vue d'ensemble d'un appareil de pressage selon l'invention ;
- la figure 2 illustre une vue d'ensemble éclatée de l'appareil de pressage ;
- les figures 3 à 6 illustrent différentes vues d'un mode de réalisation préféré de la vis de pressage sur l'appareil de pressage ;
- les figures 7 et 8 illustrent deux vues d'un tambour filtrant de l'appareil de pressage ;
- la figure 9 illustre la vis de pressage mise en place dans le tambour filtrant ;
- les figures 10 et 11 illustrent deux vues de la vis de pressage et du tambour filtrant qui sont mis en place dans le réceptacle de l'appareil de pressage ;
- les figures 12 et 13 illustrent deux vues du réceptacle ;
- la figure 14 illustre une vue d'ensemble de l'appareil de pressage, mettant en évidence la présence des moyens d'entraînement de la vis de pressage.

### Description détaillée

Dans la suite de la description, l'appareil de pressage de fruits et/ou légumes est désigné « l'appareil ».

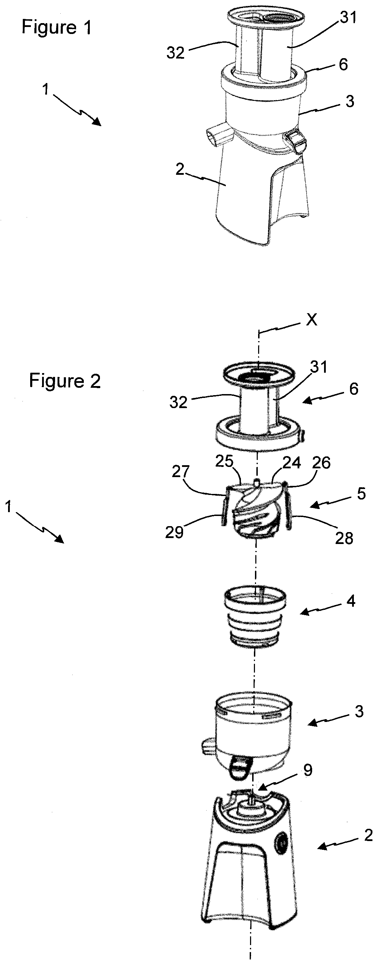

Tel qu'illustré en figures 1 et 2, l'appareil 1 comprend un boîtier 2, un réceptacle 3, un tambour filtrant 4, une vis de pressage 5 et un couvercle 6.

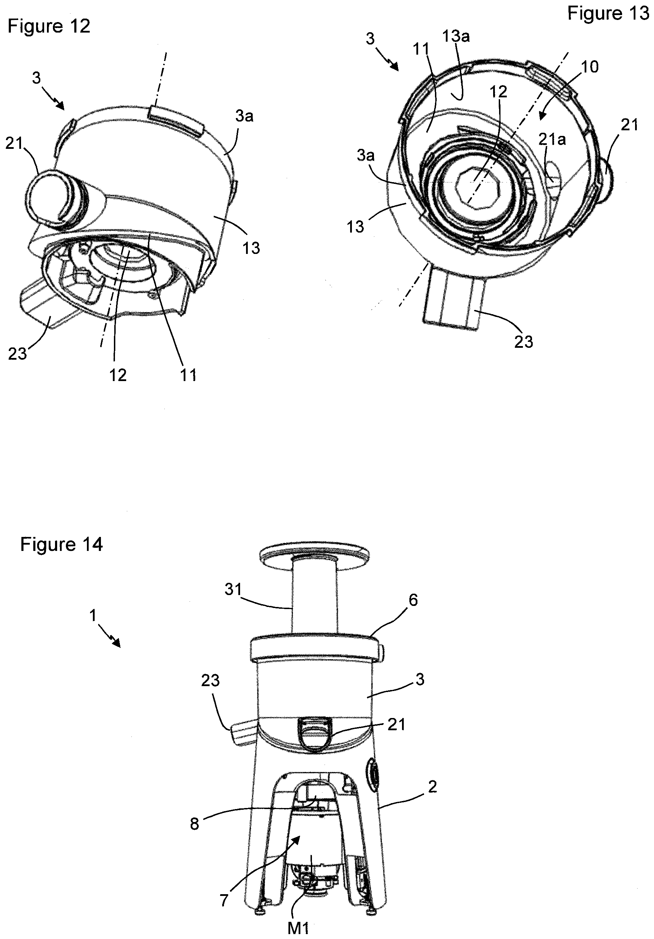

Le boitier 2 intègre des moyens d'entraînement 7 comportant un moteur M1 et un mécanisme de transmission 8 permettant l'entraînement en rotation d'un axe d'entraînement 9 agencé selon un axe de rotation X vertical, tel que l'illustrent les figures 2 et 14.

Le réceptacle 3 définit une enceinte 10 ouverte en partie supérieure 3a dudit réceptacle 3, l'enceinte 10 étant délimitée par un fond 11 muni d'un trou 12 et une paroi latérale 13, tel que l'illustrent les figures 12 et 13. La paroi latérale 13 peut notamment être sensiblement cylindrique, et/ou légèrement tronconique. Lorsque le réceptacle 3 est engagé sur le boîtier 2, l'axe d'entraînement 9 passe au travers du trou 12 du réceptacle 3.

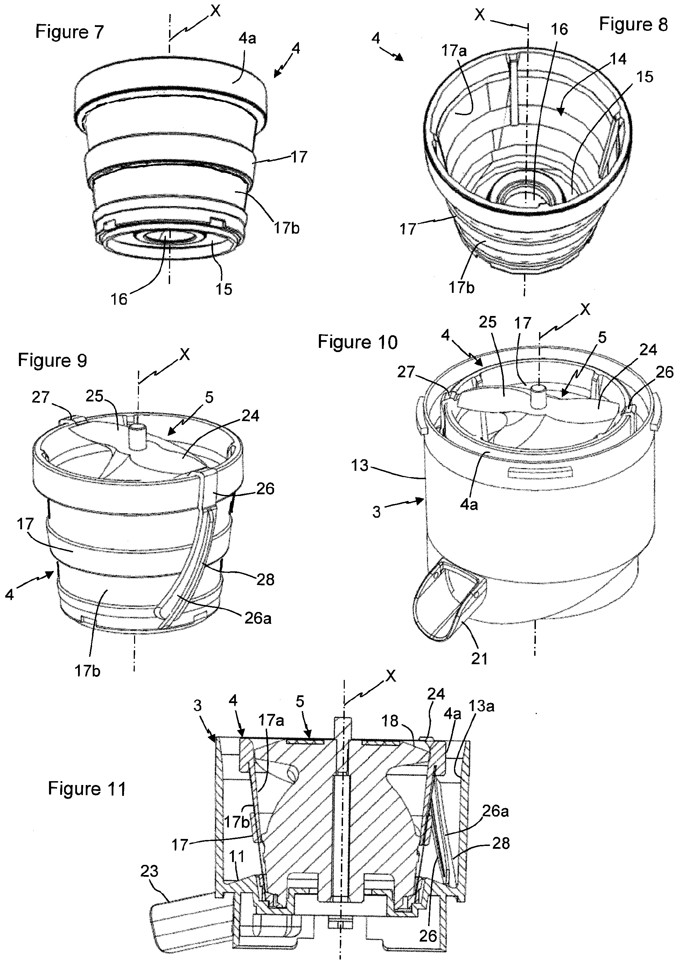

Le tambour filtrant 4 comprend préférentiellement une forme conique et définit également une enceinte 14 ouverte au niveau du bord périphérique supérieur 4a dudit tambour filtrant 4, cette enceinte 14 étant délimitée par un fond 15 muni d'un trou 16 et une paroi latérale 17, tel que l'illustrent les figures 7 et 8. La paroi latérale 17 est avantageusement tronconique. Lorsque le tambour filtrant 4 est inséré dans l'enceinte 10 du réceptacle 3, l'axe d'entraînement 9 passe également au travers du trou 16 du tambour filtrant 4, lequel correspond avec le trou 12 du réceptacle 3. De préférence, l'appareil 1 comprend deux tambours filtrants 4 de conception similaire, seule changeant la paroi latérale 17 de chaque tambour filtrant 4, l'une des parois latérales 17 étant configurée pour filtrer des jus et l'autre paroi latérale 17 étant configurée pour filtrer des coulis.

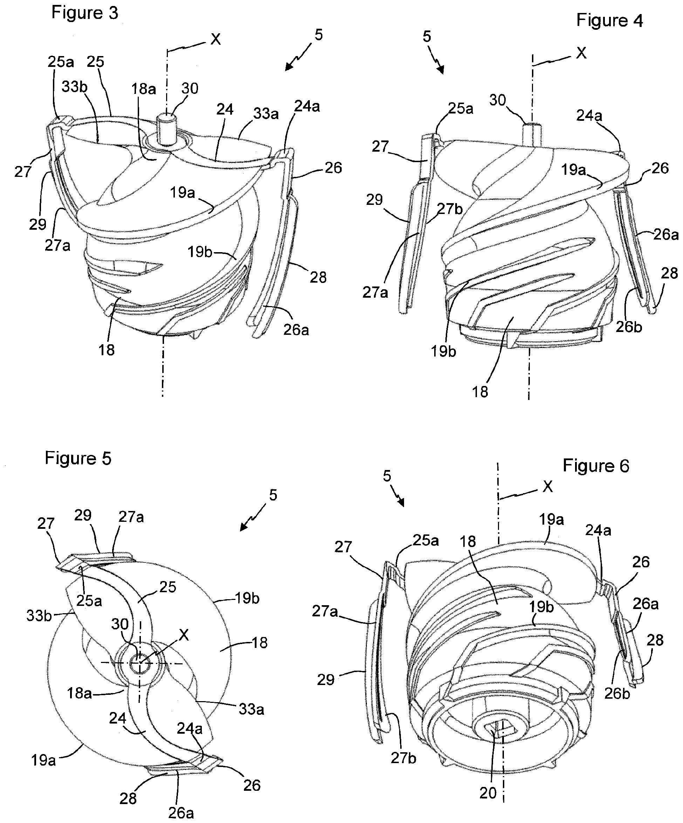

Tel qu'illustré sur les figures 3 à 6, la vis de pressage 5 comprend un corps 18 muni de deux filets hélicoïdaux principaux 19a, 19b. Chaque filet hélicoïdal principal 19a, 19b s'étend à partir d'un bord supérieur d'attaque 33a, 33b. L'extrémité supérieure de la vis de pressage 5 comporte ainsi deux bords d'attaque 33a, 33b. Le corps 18 est configuré pour être inséré dans l'enceinte 14 du tambour filtrant 4. Le corps 18 comprend un fond muni d'un trou carré 20 qui est configuré pour recevoir par emboîtement l'axe d'entraînement 9, lequel est également de forme carrée. L'activation des moyens d'entraînement 7 sur le boîtier 2 entraîne donc la rotation de la vis de pressage 5 selon l'axe de rotation X, ce qui permet de presser les fruits et/ou les légumes contre une face interne 17a de la paroi latérale 17 durant la rotation de la vis de pressage 5 selon l'axe de rotation X.

Le pressage des fruits et/ou légumes permet au jus ou au coulis (selon le type de tambour filtrant 4) de passer au travers de la paroi latérale 17 pour se retrouver dans l'enceinte 10 du réceptacle 3, entre une face interne 13a de la paroi cylindrique 13 et une face externe 17b de la paroi latérale 17. Le fond 11 de l'enceinte 10 du réceptacle 3 comprend une inclinaison. En outre, le réceptacle 3 comprend un premier conduit 21 agencé sur la paroi cylindrique 13 et comprenant une entrée 21a qui communique avec l'enceinte 10, cette entrée 21a étant agencée au niveau du point le plus bas du fond 11 présentant une inclinaison. Un second conduit 23 est agencé en partie inférieure du réceptacle 3. Le second conduit 23 comprend une entrée qui communique avec le fond 11 du réceptacle 3.

Les jus ou coulis (non illustré) s'écoulent sur le fond 11 autour du tambour filtrant 4 et sont évacués par le premier conduit 21, hors de l'enceinte 10 du réceptacle 3, pour être réceptionnés dans un récipient du type verre ou pichet. On constate sur les figures 12 et 13 la mise en oeuvre d'une variante de forme du premier conduit 21, comparée à celle des figures 1, 2, 10 et 14.

Les matières sèches des fruits et/ou légumes, une fois le jus ou le coulis extrait, se déplacent dans le fond 15 de l'enceinte 14 du tambour filtrant 4, sous l'action de la rotation de la vis de pressage 5, et sont évacuées par un passage (non représenté sur les figures) débouchant dans l'entrée du second conduit 23 lorsque ledit tambour filtrant 4 est en place dans le réceptacle 3. En d'autres termes, le second conduit 23 d'évacuation des matières sèches prolonge ledit passage traversant le fond 15 du tambour filtrant 4 lorsque ledit tambour filtrant 4 est agencé dans ledit réceptacle 3. Les matières sèches sont collectées au moyens d'un récipient du type saladier ou autre.

La vis de pressage 5 comprend deux bras 24, 25 qui sont agencés radialement par rapport à l'axe de rotation X, et en opposition en partie supérieure 18a du corps 18, de préférence au niveau de la partie supérieure des filets hélicoïdaux principaux 19a, 19b. Chacun des bras 24, 25 s'étend radialement par rapport à l'axe de rotation X à partir du corps 18. De préférence, chacun des bras 24, 25 s'étend radialement par rapport à l'axe de rotation X à partir de la partie supérieure du corps 18.

Dans l'exemple de réalisation illustré sur les figures, les bras 24, 25 sont agencés sur la partie supérieure des filets hélicoïdaux principaux 19a, 19b en arrière des bords supérieurs d'attaque 33a, 33b. A titre de variante, au moins un des bras 24, 25, et de préférence chacun des bras 24, 25, pourrait former l'un des bords supérieurs d'attaque 33a, 33b.

Dans l'exemple de réalisation illustré sur les figures, les bras 24, 25 se rejoignent en entourant l'axe de rotation X. En d'autres termes, les bras 24, 25 sont issus d'une même pièce. A titre de variante, les bras 24, 25 pourraient notamment être formés par deux pièces distinctes.

Ces bras 24, 25 s'étendent jusqu'au bord périphérique supérieur 4a du tambour filtrant 4 lorsque la vis de pressage 5 est insérée dans le tambour filtrant 4, et comportent, au niveau de leurs extrémités distales 24a, 25a respectives, une ailette 26, 27. Ces ailettes 26, 27 sont configurées pour s'étendre vers une partie inférieure du corps 18 à distance du corps 18, comme l'illustrent les figures 3 à 6. En d'autres termes, les ailettes 26, 27 sont configurées pour s'étendre vers le bas, à distance des filets hélicoïdaux principaux 19a, 19b. Dans l'exemple de réalisation illustré sur les figures, les ailettes 26, 27 s'étendent en direction de la partie inférieure de la vis de pressage 5. Tel que bien visible sur les figures 3 et 6, les extrémités distales 24a, 25a des bras 24, 25 présentent un logement inférieur agencé en périphérie du corps 18 de la vis de pressage 5. Tel que bien visible sur les figures 9 et 10, le logement inférieur des extrémités distales 24a, 25a des bras 24, 25 reçoit une partie supérieure du bord périphérique supérieur 4a du tambour filtrant 4.

Lorsque la vis de pressage 5 est insérée dans le tambour filtrant 4, les deux ailettes 26, 27 sont disposées à l'extérieur dudit tambour filtrant 4, le long de la face externe 17b de la paroi latérale 17, avec un espacement par rapport à celle-ci, comme l'illustre la figure 9. Les extrémités distales 24a, 25a des bras 24, 25 s'étendent au dessus du bord supérieur du tambour filtrant 4, tel que l'illustrent les figures 9 et 10.

Les deux ailettes 26, 27 comprennent chacun un élément de nettoyage 28, 29 constitué d'un racloir. Ces éléments de nettoyage 28, 29 sont agencés sur des côtés externes 26a, 27a des ailettes 26, 27.

Lorsque le tambour filtrant 4 et la vis de pressage 5 sont insérés dans le réceptacle 3, les éléments de nettoyage 28, 29 viennent au contact de la face interne 13a de la paroi cylindrique 13 du réceptacle 3, comme l'illustrent les figures 10 et 11. La rotation de la vis de pressage 5 permet aux éléments de nettoyage 28, 29 de balayer la face interne 13a de la paroi cylindrique 13, ce qui permet au jus ou coulis présent sur cette face interne 13a de tomber dans le fond 11 de l'enceinte 10 pour être ensuite évacué par le premier conduit 21.

Tel qu'illustré sur les figures 3 à 6, notamment, les ailettes 26, 27 et leurs éléments de nettoyage 28, 29 présentent une extrémité libre fuyante vers l'arrière par rapport au sens de rotation de la vis de pressage 5 selon l'axe de rotation X, de sorte à favoriser la descente du jus ou coulis sur ladite face interne 13a, vers le fond 11 de l'enceinte 10. Tel que représenté sur les figures 3 à 6, le sens de rotation de la vis de pressage 5 vue de dessus est le sens anti-horaire. De plus, les extrémités libres fuyantes des éléments de nettoyage 28, 29 sont incurvées, ce qui facilite encore davantage la descente du jus ou coulis sur ladite face interne 13a, vers le fond 11 de l'enceinte 10.

Le réceptacle 3 est fermé par le couvercle 6, une fois le tambour filtrant 4 et la vis de pressage 5 insérés dans l'enceinte 10 dudit réceptacle 3. La vis de pressage 5 comprend un embout cylindrique supérieur 30 défini selon l'axe de rotation X et venant s'emboîter dans un logement cylindrique (non illustré) correspondant sur le couvercle 6, ce qui permet de maintenir convenablement en position ladite vis de pressage 5 durant sa rotation selon l'axe de rotation X. Le couvercle 6 comprend deux embouchures 31, 32 permettant d'insérer les fruits et/ou légumes par le dessus, pour les faire tomber dans l'enceinte 14 du tambour filtrant 4 au niveau des bords supérieurs d'attaque 33a, 33b des filets hélicoïdaux principaux 19a, 19b de la vis de pressage 5. La rotation de la vis de pressage 5 emporte alors lesdits fruits et/ou légumes pour les presser contre la face interne 17a de la paroi latérale 17. Concomitamment, les éléments de nettoyage 28, 29 raclent la face interne 13a de la paroi cylindrique 13.

La description qui précède n'a aucun caractère limitatif, de nombreuses variantes de l'appareil 1 étant envisageables sans sortir du cadre de l'invention, notamment quant à la mise en oeuvre de la vis de pressage 5.

Les éléments de nettoyage 28, 29 sur les ailettes 26, 27 peuvent être agencés sur des côtés internes 26b, 27b desdites ailettes, avec une configuration leur permettant de balayer la face externe 17b de la paroi latérale 17 du tambour filtrant 4, afin de récupérer le jus ou coulis présent sur cette face externe 17b. Dans ce cas, les éléments de nettoyage 28, 29 sont de préférence constitués de brosses plutôt que de racloir. On peut prévoir une autre variante avec un élément de nettoyage 28 de type racloir sur le côté externe 26a de l'ailette 26 et un élément de nettoyage 29 de type brosse sur le côté interne 27b de l'ailette 27. On peut aussi prévoir une autre variante comprenant des éléments de nettoyage 28, 29 combinant un racloir sur les côtés externes 26a, 27a et une brosse sur les côtés internes 26b, 27b des ailettes 26, 27. D'autres variantes restent envisageables.

A titre de variante, la vis de pressage 5 ne comprend pas nécessairement un corps 18 muni de deux filets hélicoïdaux principaux 19a, 19b. La vis de pressage 5 peut comprendre un corps 18 muni d'au moins un filet hélicoïdal principal 19a, 19b, de préférence entre un et trois filets hélicoïdaux. De préférence, la vis de pressage 5 comporte autant de bras 24, 25 que de filets hélicoïdaux principaux 19a, 19b.

A titre de variante, l'axe d'entraînement 9 des moyens d'entraînement 7 peut être agencé selon une orientation principalement verticale.

La présente invention n'est nullement limitée aux exemples de réalisation décrits et à leurs variantes, mais englobe de nombreuses modifications dans le cadre des revendications.

## Revendications

1. Vis de pressage (5) d'un appareil (1) de pressage d'aliments de type fruits et/ou légumes, comprenant un corps (18) muni d'au moins un filet hélicoïdal principal (19a, 19b) s'étendant autour d'un axe de rotation (X), **caractérisée en ce qu'**elle comprend au moins un bras (24, 25) qui s'étend radialement par rapport à l'axe de rotation (X), ledit bras (24, 25) comportant à son extrémité distale (24a, 25a) une ailette (26, 27) configurée pour s'étendre vers une partie inférieure du corps (18) à distance du corps (18), ladite ailette (26, 27) comprenant au moins un élément de nettoyage (28, 29).

2. Vis de pressage (5) selon la revendication 1, **caractérisée en ce qu'**elle comprend deux bras (24, 25) disposés en opposition et comportant chacun une ailette (26, 27) munie d'un élément de nettoyage (28, 29).

3. Vis de pressage (5) selon l'une des revendications 1 ou 2, **caractérisée en ce que** l'élément de nettoyage (28, 29) est agencé sur un côté externe (26a, 27a) de l'ailette (26, 27).

4. Vis de pressage (5) selon l'une des revendications 1 à 3, **caractérisée en ce que** l'élément de nettoyage (28, 29) est agencé sur un côté interne de l'ailette (26, 27).

5. Vis de pressage (5) selon l'une des revendications 1 à 4, **caractérisée en ce que** l'élément de nettoyage (28, 29) est un racloir.

6. Vis de pressage (5) selon l'une des revendications 1 à 4, **caractérisée en ce que** l'élément de nettoyage (28, 29) est une brosse.

7. Vis de pressage (5) selon l'une des revendications 1 à 6, **caractérisée en ce que** l'élément de nettoyage (28, 29) présente une extrémité libre fuyante vers l'arrière par rapport au sens de rotation de la vis de pressage (5) selon l'axe de rotation (X).

8. Vis de pressage (5) selon la revendication 7, **caractérisée en ce que** l'extrémité libre fuyante de l'élément de nettoyage (28, 29) est incurvée.

9. Appareil (1) de pressage d'aliments de type fruits et/ou légumes, comprenant un réceptacle (3), un tambour filtrant (4) logé dans le réceptacle (3) et configuré pour séparer plus ou moins le jus de la matière sèche, une vis de pressage (5) configurée pour être logée dans le tambour filtrant (4) et pour presser les aliments contre une face interne (17a) dudit tambour filtrant (4) lors de sa rotation, et des moyens d'entraînement (7) en rotation de la vis de pressage (5) autour d'un axe de rotation (X) principalement vertical, **caractérisé en ce que** la vis de pressage (5) est conforme à l'une des revendications 1 à 8, **en ce que** ledit bras (24, 25) s'étend radialement à l'axe de rotation (X) principalement vertical jusqu'à proximité d'un bord périphérique supérieur (4a) du tambour filtrant (4), **en ce que** ladite ailette (26, 27) s'étend entre la face interne (13a) du réceptacle (3) et la face externe (17b) du tambour filtrant (4), et **en ce que** ledit élément de nettoyage (28, 29) balaie ladite face interne (13a) du réceptacle (3) et/ou ladite face externe (17b) du tambour filtrant (4).

10. Appareil (1) de pressage selon la revendication 9, **caractérisé en ce que** l'élément de nettoyage (28, 29) est configuré pour nettoyer la face interne (13a) du réceptacle (3).

11. Appareil (1) de pressage selon la revendication 9, **caractérisé en ce que** l'élément de nettoyage (28, 29) est configuré pour nettoyer la face externe (17b) du tambour filtrant (4).

12. Appareil (1) de pressage selon la revendication 9, **caractérisé en ce que** l'élément de nettoyage (28, 29) est configuré pour nettoyer à la fois la face interne (13a) du réceptacle (3) et la face externe (17b) du tambour filtrant (4).

13. Appareil (1) de pressage selon l'une des revendications 9 à 12, **caractérisé en ce que** l'extrémité distale (24a, 25a) du bras (24, 25) présente un logement inférieur recevant une partie supérieure du bord périphérique supérieur (4a) du tambour filtrant (4).

14. Appareil (1) de pressage selon l'une des revendications 9 à 13, **caractérisé en ce que** le réceptacle (3) comprend des premiers moyens d'évacuation (21) des jus ou coulis et des seconds moyens d'évacuation (23) des matières sèches.

15. Appareil (1) de pressage selon l'une des revendications 9 à 14, lequel comprend un boîtier (2) configuré pour recevoir le réceptacle (3), ledit boîtier (2) intégrant un moteur (M1) d'entraînement en rotation d'un axe d'entraînement (9) agencé selon une orientation principalement verticale, le réceptacle comprenant un premier trou (12) de passage dudit axe de rotation et le tambour filtrant (4) comprenant un deuxième trou (16) de passage dudit axe d'entraînement, des moyens de connexion étant mis en oeuvre entre l'axe de rotation et la vis de pressage (5).

## Patentansprüche

1. Pressschraube (5) eines Geräts (1) zum Pressen von Nahrungsmitteln vom Typ Früchte und / oder Gemüse, umfassend einen Körper (18), der mit mindestens einem Hauptspiralgewinde (19a, 19b) versehen ist, das sich um eine Drehachse (X) erstreckt, **dadurch gekennzeichnet, dass** sie mindestens einen Arm (24, 25) umfasst, der sich radial in Bezug auf die Drehachse (X) erstreckt, wobei der Arm (24, 25) an seinem distalen Ende (24a, 25a) eine Rippe (26, 27) aufweist, die konfiguriert ist, sich zu einem unteren Abschnitt des Körpers (18) im Abstand von dem Körper (18) zu erstrecken, wobei die Rippe (26, 27) mindestens ein Reinigungselement (28, 29) umfasst.

2. Pressschraube (5) nach Anspruch 1, **dadurch gekennzeichnet, dass** sie zwei Arme (24, 25) umfasst, die gegenüberliegend angeordnet sind und jeweils eine mit einem Reinigungselement (28, 29) versehene Rippe (26, 27) aufweisen.

3. Pressschraube (5) nach einem der Ansprüche 1 oder 2, **dadurch gekennzeichnet, dass** das Reinigungselement (28, 29) an einer Außenseite (26a, 27a) der Rippe (26, 27) angeordnet ist.

4. Pressschraube (5) nach einem der Ansprüche 1 bis 3, **dadurch gekennzeichnet, dass** das Reinigungselement (28, 29) an einer Innenseite der Rippe (26, 27) angeordnet ist.

5. Pressschraube (5) nach einem der Ansprüche 1 bis 4, **dadurch gekennzeichnet, dass** das Reinigungselement (28, 29) ein Abstreifer ist.

6. Pressschraube (5) nach einem der Ansprüche 1 bis 4, **dadurch gekennzeichnet, dass** das Reinigungselement (28, 29) eine Bürste ist.

7. Pressschraube (5) nach einem der Ansprüche 1 bis 6, **dadurch gekennzeichnet, dass** das Reinigungselement (28, 29) ein freies Ende aufweist, das in Bezug auf die Drehrichtung der Pressschraube (5) um die Drehachse (X) nach hinten läuft.

8. Pressschraube (5) nach Anspruch 7, **dadurch gekennzeichnet, dass** das laufende freie Ende des Reinigungselements (28, 29) gekrümmt ist.

9. Gerät (1) zum Pressen von Nahrungsmitteln vom Typ Früchte und / oder Gemüse, umfassend einen Behälter (3), eine Filtertrommel (4), die in dem Behälter (3) untergebracht und konfiguriert ist, den Saft mehr oder weniger von dem trockenen Feststoff zu trennen, eine Pressschraube (5), die konfiguriert ist, in der Filtertrommel (4) untergebracht zu werden und die Nahrungsmittel gegen eine Innenfläche (17a) der Filtertrommel (4) während ihrer Drehung zu pressen, und Mittel (7) zum Antreiben der Pressschraube (5) um eine hauptsächlich vertikale Drehachse (X) in Drehung, **dadurch gekennzeichnet, dass** die Pressschraube (5) nach einem der Ansprüche 1 bis 8 ist, dass sich der Arm (24, 25) radial zu der im Wesentlichen vertikalen Drehachse (X) bis nahe an eine obere Umfangskante (4a) der Filtertrommel (4) erstreckt, dass sich die Rippe (26, 27) zwischen der Innenfläche (13a) des Behälters (3) und der Außenfläche (17b) der Filtertrommel (4) erstreckt, und dass das Reinigungselement (28, 29) die Innenfläche (13a) des Behälters (3) und / oder die Außenfläche (17b) der Filtertrommel (4) überstreicht.

10. Gerät (1) zum Pressen nach Anspruch 9, **dadurch gekennzeichnet, dass** das Reinigungselement (28, 29) konfiguriert ist, um die Innenfläche (13a) des Behälters (3) zu reinigen.

11. Gerät (1) zum Pressen nach Anspruch 9, **dadurch gekennzeichnet, dass** das Reinigungselement (28, 29) konfiguriert ist, um die Außenfläche (17b) der Filtertrommel (4) zu reinigen.

12. Gerät (1) zum Pressen nach Anspruch 9, **dadurch gekennzeichnet, dass** das Reinigungselement (28, 29) konfiguriert ist, sowohl die Innenfläche (13a) des Behälters (3) als auch die Außenfläche (17b) der Filtertrommel (4) zu reinigen.

13. Gerät (1) zum Pressen nach einem der Ansprüche 9 bis 12, **dadurch gekennzeichnet, dass** das distale Ende (24a, 25a) des Arms (24, 25) eine untere Ausnehmung aufweist, die einen oberen Teil der oberen Umfangskante (4a) der Filtertrommel (4) aufnimmt.

14. Gerät (1) zum Pressen nach einem der Ansprüche 9 bis 13, **dadurch gekennzeichnet, dass** der Behälter (3) erste Mittel (21) zum Abtransport der Säfte oder des Pürees und zweite Mittel (23) zum Abtransport von trockenen Feststoffen aufweist.

15. Gerät (1) zum Pressen nach einem der Ansprüche 9 bis 14, das ein Gehäuse (2) aufweist, das konfiguriert ist, um einen Behälter (3) aufzunehmen, wobei das Gehäuse (2) einen Motor (M1) zum Antreiben einer Antriebsachse (9) in Rotation aufweist, die in einer im Wesentlichen vertikalen Ausrichtung angeordnet ist, wobei der Behälter ein erstes Loch (12) zum Durchgang der Drehachse umfasst, und wobei die Filtertrommel (4) ein zweites Loch (16) zum Durchgang der Antriebsachse umfasst, wobei Verbindungsmittel zwischen der Drehachse und der Pressschraube (5) verwendet werden.

## Claims

1. Screw for pressing (5) of an apparatus (1) for pressing food of the fruit and/or vegetable type, comprising a body (18) provided with at least one main helical thread (19a, 19b) extending about an axis of rotation (X), **characterised in that** it comprises at least one arm (24, 25) that extends radially with respect to the axis of rotation (X), said arm (24, 25) comprising at its distal end (24a, 25a) a blade (26, 27) configured to extend to a lower portion of the body (18) at a distance from the body (18), said blade (26, 27) comprising at least one cleaning element (28, 29).

2. Screw for pressing (5) according to claim 1, **characterised in that** it comprises two arms (24, 25) arranged in opposition and each comprising a blade (26, 27) provided with a cleaning element (28, 29).

3. Screw for pressing (5) according to one of claims 1 or 2, **characterised in that** the cleaning element (28, 29) is arranged on an outer side (26a, 27a) of the blade (26, 27).

4. Screw for pressing (5) according to one of claims 1 to 3, **characterised in that** the cleaning element (28, 29) is arranged on an inner side of the blade (26, 27).

5. Screw for pressing (5) according to one of claims 1 to 4, **characterised in that** the cleaning element (28, 29) is a scraper.

6. Screw for pressing (5) according to one of claims 1 to 4, **characterised in that** the cleaning element (28, 29) is a brush.

7. Screw for pressing (5) according to one of claims 1 to 6, **characterised in that** the cleaning element (28, 29) has a free end flowing towards the rear with respect to the direction of rotation of the screw for pressing (5) along the axis of rotation (X).

8. Screw for pressing (5) according to claim 7, **characterised in that** the free-flowing end of the cleaning element (28, 29) is curved.

9. Apparatus (1) for pressing food of the fruit and/or vegetable type, comprising a container (3), a filtering drum (4) housed in the container (3) and configured to separate more or less the juice from the dry matter, a screw for pressing (5) configured to be housed in the filtering drum (4) and for pressing the food against an inner face (17a) of said filtering drum (4) during the rotation thereof, and means for driving (7) in rotation the screw for pressing (5) about an axis of rotation (X) that is primarily vertical, **characterised in that** the screw for pressing (5) is in accordance with one of claims 1 to 8, **in that** said arm (24, 25) extends radially to the mainly vertical axis of rotation (X) until the vicinity of an upper peripheral edge (4a) of the filtering drum (4), **in that** said blade (26, 27) extends between the inner face (13a) of the container (3) and the outer face (17b) of the filtering drum (4), and **in that** said cleaning element (28, 29) scans said inner face (13a) of the container (3) and/or said outer face (17b) of the filtering drum (4).

10. Apparatus (1) for pressing according to claim 9, **characterised in that** the cleaning element (28, 29) is configured to clean the inner face (13a) of the container (3).

11. Apparatus (1) for pressing according to claim 9, **characterised in that** the cleaning element (28, 29) is configured to clean the outer face (17b) of the filtering drum (4).

12. Apparatus (1) for pressing according to claim 9, **characterised in that** the cleaning element (28, 29) is configured to clean both the inner face (13a) of the container (3) and the outer face (17b) of the filtering drum (4).

13. Apparatus (1) for pressing according to one of claims 9 to 12, **characterised in that** the distal end (24a, 25a) of the arm (24, 25) has a lower housing receiving an upper portion of the upper peripheral edge (4a) of the filtering drum (4).

14. Apparatus (1) for pressing according to one of claims 9 to 13, **characterised in that** the container (3) comprises first means for removing (21) juices or coulis and second means for removing (23) dry matter.

15. Apparatus (1) for pressing according to one of claims 9 to 14, which comprises a case (2) configured to receive the container (3), said case (2) incorporating a motor (M1) for driving in rotation an drive axis (9) arranged according to a primarily vertical orientation, the container comprising a first hole (12) for the passage of said axis of rotation and the filtering drum (4) comprising a second hole (16) for the passage of said drive axis, means for connection being implemented between the axis of rotation and the screw for pressing (5).
